# EUROPEAN PATENT SPECIFICATION

(11) **EP 2 835 290 B1**
(45) Date of publication and mention of the grant of the patent: **04.10.2017**
(21) Application number: 14177681.5
(22) Date of filing: 18.07.2014
(51) Int. Cl.: B60S 1/08, G01N 21/45

(54) **Raindrop sensor**
Regentropfensensor
Capteur de pluie

(30) Priority: 07.08.2013 JP 2013164626
(43) Date of publication of application: 11.02.2015
(73) Proprietor: Valeo Japan Co., Ltd., Saitama 360-0193 (JP)
(72) Inventor: Toju, Masaaki, Tokyo, 143-8521 (JP)
(74) Representative: Oppermann, Frank

(56) References cited:
- DE-A1-102004 048 434
- DE-A1-102006 039 065
- DE-A1-102009 026 872
- US-A- 4 701 613

## Description

### BACKGROUND OF THE INVENTION

### Field of the Invention

The present invention relates to a raindrop sensor.

### Description of the Related Art

Japanese Patent Issue No. 3701309 discloses an optical type raindrop sensor that detects raindrops attached to windshield glass of a vehicle.

A raindrop sensor of this type includes a light-emitting element that emits light to windshield glass, and a light-receiving element that receives light reflected by the windshield glass, and detects raindrops based on a light receiving amount of the light-receiving element.

The raindrop sensor of Japanese Patent Issue No. 3701309 has a prism (light guide member) fixed to a surface at a vehicle interior side, of the windshield glass, and the prism guides the light emitted from the light-emitting element to a raindrop detection region that is set in the windshield glass, and guides the light reflected on the raindrop detection region to the light-receiving element.

The prism is pasted on and fixed to the windshield glass by an optically transparent adhesive sheet that is interposed between the prism and the windshield glass. Accordingly, when the prism is fixed to the windshield glass, air bubbles sometimes remain in a contact interface between the adhesive sheet and the windshield glass.

Here, if air bubbles (layer of air) exist on a route of passage of light during a time until the light emitted from the light-emitting element is received by the light-receiving element, the light is reflected on the layer of air, and the light receiving amount in the light-receiving element is reduced. Therefore, for a normal operation of the raindrop sensor, it is necessary to prevent the layer of air from being interposed on the route of the light.

Conventionally, air bubbles have been generally removed by bringing an adhesive sheet into pressure contact with windshield glass, and moving the air bubbles that exist in the contact interface to the outside of the contact interface by pressure.

However, the pressure contact force (urging force) necessary to remove air bubbles is so large that when the raindrop sensor is mounted to windshield glass, the urging force which brings the adhesive sheet into pressure contact therewith becomes a factor that inhibits mounting of the raindrop sensor to the windshield glass.

Consequently, there is a growing demand that an air bubble is prevented from remaining on the contact interface of an adhesive sheet and windshield glass while mounting of a raindrop sensor to the windshield glass is facilitated.

### SUMMARY OF THE INVENTION

The present invention is made in view of the aforementioned problems, and an object of the present invention is to provide a raindrop sensor which can be easily mounted to windshield glass and prevent air bubbles from remaining on a contact interface of an adhesive sheet and a windshield glass. According to an aspect of the present invention, a raindrop sensor in which a light guide member is mounted to a windshield glass through an optically transparent elastic member, wherein the light guide member guides light emitted from a light-emitting element to the windshield glass and guides light reflected at the windshield glass to a light-receiving element, the raindrop sensor comprising:
a bracket configured to be fixed to the windshield glass;
a cover configured to be attachable to and detachable from the bracket; and
a support member configured to support the light guide member in the cover to be capable of advancing and retracting in a mounting direction to the windshield glass, wherein
the elastic member is configured by a gas-permeable silicon sheet containing silicon oil,
when the cover is mounted to the bracket, the support member and the elastic member are compressed in the mounting direction,-and the light guide member is brought into pressure contact with the windshield glass via the elastic member, and
a compression spring constant of the support member is set at a value smaller than a compression spring constant of the elastic member, so that a compression amount in the mounting direction of the elastic member at the time of mounting the cover to the bracket becomes smaller than a compression amount in the mounting direction of the support member.

The elastic member is the gas-permeable silicon sheet containing silicon oil, and the silicon sheet has the property of eliminating air bubbles that exist between the silicon sheet and the windshield glass, as a result that gas components are discharged to outside through the inside of the silicon sheet after a time elapses with a very small load (loading) acting on the silicon sheet, even if the air bubbles exist between the silicon sheet and the windshield glass with which the elastic member is in contact.

Therefore, by only bringing the elastic member into pressure contact with the windshield glass by applying a very small load, the air bubbles that exist between the elastic member and the windshield glass can be removed. Accordingly, it is not necessary to bring the elastic member into pressure contact with the windshield glass by applying a large load, as in the conventional raindrop sensor, and therefore, mounting of the raindrop sensor to the windshield glass is facilitated.

Further, the compression amount in the mounting direction of the elastic member at the time of mounting the cover to the bracket is smaller than the compression amount in the mounting direction of the support member, and therefore, even if the elastic member is brought into pressure contact with the windshield glass with a very small load, the influence of the error in the mounting direction of the elastic member to the windshield glass is decreased. Accordingly, even if the elastic member is brought into pressure contact with the windshield glass with a very small load, the optical performance of the raindrop sensor can be favorably prevented from being reduced by the influence of the error in the mounting direction.

DE 10 2009 026 872 A1 describes a raindrop sensor comprising a light guide member which is mounted to a windshield glass through an optically transparent elastic member. The light guide member guides light emitted from a light-emitting element to the windshield glass and guides light reflected at the windshield glass to a light-receiving element. The raindrop sensor further comprises a base part to be fixed to the windshield glass and a cover part which is attachable to and detachable from the base part. A support member is provided for supporting the light guide member to be capable of advancing and retracting in a mounting direction to the windshield glass, when the cover part is mounted to the base part.

### BRIEF DESCRIPTION OF THE DRAWINGS

Other objects, features, and advantages of the present invention will become more apparent from the following detailed description made with reference to the accompanying drawings, in which like parts are designated by like reference numbers and in which:
Fig. 1 is an exploded perspective view of a raindrop sensor;
Figs. 2A and 2B are sectional views of the raindrop sensor;
Figs. 3A and 3B are sectional views of the raindrop sensor;
Fig. 4 is a plan view of the raindrop sensor seen from a windshield glass side;
Figs. 5A to 5D are views explaining mounting of a raindrop sensor main body to a bracket;
Figs. 6A and 6B are diagrams explaining compression of a spring and an optical contact;
Fig. 7 is a view explaining an error amount of the windshield glass; and
Figs. 8A to 8C are views explaining a relation of a variation in thickness of the windshield glass, and a light irradiation region and a raindrop detection region.

### DESCRIPTION OF THE PREFERRED EMBODIMENT

Hereinafter, an embodiment of the present invention will be described with a case of a raindrop sensor 1 that detects raindrops attached to windshield glass 2 cited as an example.

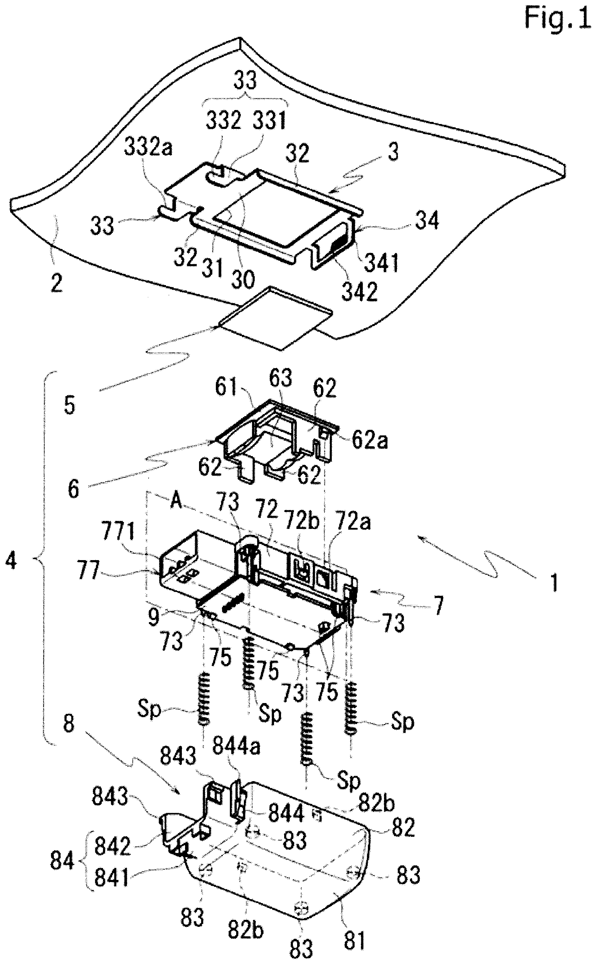

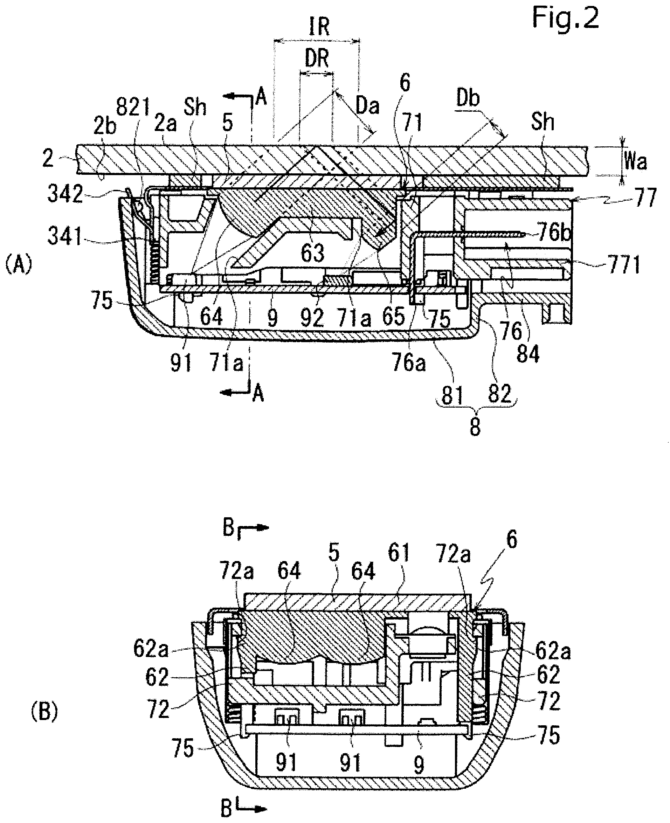

Fig. 1 is an exploded perspective view of the raindrop sensor 1. Figs. 2A and 2B are sectional views of the raindrop sensor 1, wherein Fig. 2A is a sectional view showing a portion of a case 7 cut at a surface A in Fig. 1 together with other constituent elements of the raindrop sensor 1, and Fig. 2B is a sectional view taken along a line A-A in Fig. 2A.

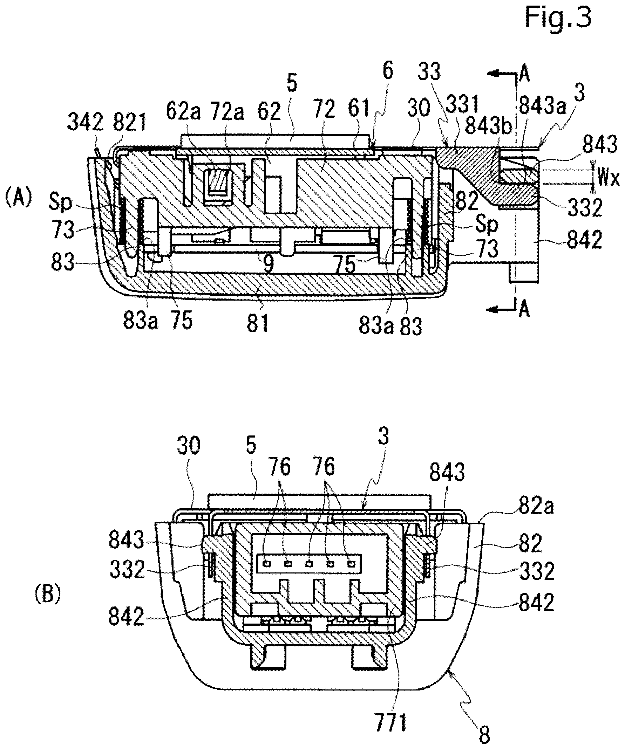

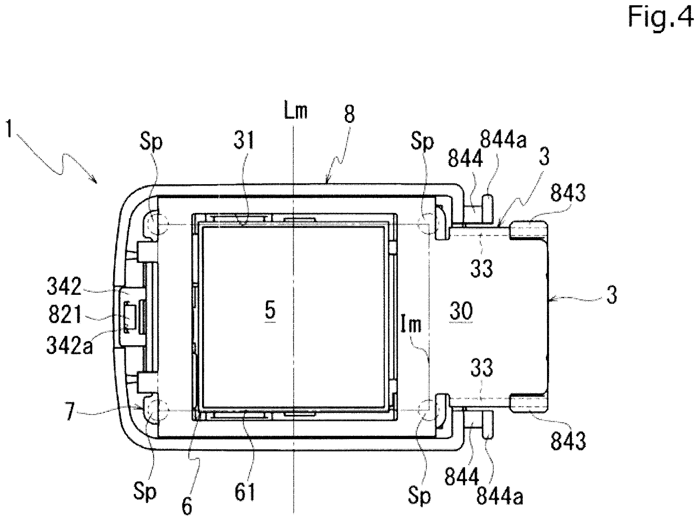

Figs. 3A and 3B are sectional views of the raindrop sensor 1, wherein Fig. 3A is a sectional view taken along a line B-B in Fig. 2B, and Fig. 3B is a sectional view taken along a line A-A in Fig. 3A. Fig. 4 is a plan view of the raindrop sensor 1 seen from a windshield glass 2-side, and is a view showing positions of springs Sp by virtual lines. Note that in Fig. 2B and Figs. 3A and 3B, illustration of the windshield glass 2 is omitted. Further, hereinafter, explanation will be made with an upper side in Fig. 1 set as an upper part and a lower side in Fig. 1 set as a lower part for the convenience of explanation.

The raindrop sensor 1 is configured by attaching a raindrop sensor main body 4 to a bracket 3 fixed to the windshield glass 2.

The bracket 3 is formed by folding a metal sheet, and has a plate-shaped mounting portion 30 that is fixed to the windshield glass 2.

In the embodiment, the mounting portion 30 is pasted on and fixed to an inner surface 2b at a vehicle interior side of the windshield glass 2 via an adhesive sheet Sh (see Fig. 2A) that is pasted on a surface at a windshield glass 2-side, of the mounting portion 30.

In a substantial center of the mounting portion 30, an opening 31 in a rectangular shape is formed, and a detection region for raindrops (raindrop detection region) that is set on the windshield glass 2 is exposed to an inner side of the opening 31.

At both sides of the opening 31, reinforcing wall portions 32 and 32 that are formed by folding the mounting portion 30 to a side opposite to the windshield glass 2 are provided, and rigidity strength at a perimeter of the opening 31 in the mounting portion 30 is enhanced by the reinforcing wall portions 32 and 32.

At one side in a longitudinal direction of the mounting portion 30, locking portions 33 and 33 to which latch portions 843 of a cover 8 that will be described later are locked are formed by protruding downward from both side portions in a width direction of the mounting portion 30.

The locking portions 33 and 33 are formed by folding both side portions of the mounting portion 30 in the same direction as the reinforcing wall portion 32, and each has a base portion 331 extending downward in a direction to be away from the mounting portion 30, and an extending portion 332 that extends from a lower portion of the base portion 331.

The extending portion 332 extends in a direction to be away from the opening 31 parallel to the mounting portion 30, at a lower side from the reinforcing wall portion 32, and the latch portion 843 of the cover 8 that will be described later is locked to a side edge 332a, which is at a mounting portion 30-side, (upper side in the drawing) of the extending portion 332.

At the other side in a longitudinal direction of the mounting portion 30, an engaging portion 34 with which an engaging projection 821 (see Fig. 2A) of the cover 8 which will be described later is engaged is provided to extend in the same direction as the reinforcing wall portion 32. The engaging portion 34 is formed by folding a frame portion 341 in a rectangular shape that is connected to the mounting portion 30 at a base end side thereof, and has an elastic engaging portion 342 that extends upward of a windshield glass 2-side at a side edge of a lower side of the frame portion 341.

The elastic engaging portion 342 is elastically deformable in the longitudinal direction (lateral direction in Fig. 2A) of the mounting portion 30, and when the raindrop sensor main body 4 is mounted to the bracket 3, the engaging projection 821 of the cover 8 which will be described later is snap-engaged with an engaging hole 342a (see Fig. 4) of the elastic engaging portion 342.

As shown in Fig. 1, the raindrop sensor main body 4 includes an optical contact 5, a prism 6, a case 7 (movable board), and the cover 8 in order from the windshield glass 2-side.

In the raindrop sensor main body 4, the case 7 to which the prism 6 and a substrate 9 are attached is supported by the cover 8, and in the cover 8, the case 7 is supported to be capable of advancing and retracting in a vertical direction in the drawing by the springs Sp which are interposed between the case 7 and the cover 8.

The optical contact 5 forms a rectangular shape in a plan view, and is formed into a size as is capable of being accommodated in the opening 31 which is provided in the bracket 3.

The optical contact 5 is an elastic member having optical transparency, and in the embodiment, a gas-permeable silicon sheet containing silicon oil is used therefor.

The optical contact 5 is pasted on a surface at a bracket 3-side, of the prism 6 (pasting portion 61) before the raindrop sensor main body 4 is mounted to the bracket 3, and when the raindrop sensor main body 4 is mounted to the bracket 3, the optical contact 5 is held in a compressed state between the windshield glass 2 and the pasting portion 61.

In this case, the gas permeable silicon sheet has a property of eliminating air bubbles that exist between the silicon sheet, and the windshield glass 2 and the pasting portion 61 as a result that gas components are discharged to outside through an inside of the silicon sheet after a time elapses with a very small load (loading) acting on the silicon sheet even if the air bubbles (gas components) exist between the silicon sheet, and the windshield glass 2 and the pasting portion 61 with which the silicon sheet is in contact.

The pasting portion 61 of the prism 6 is a plate-shaped portion on which the optical contact 5 is pasted, and in a plan view, the pasting portion 61 is formed into a rectangular shape of a size larger than the optical contact 5 to be capable of being accommodated in the opening 31 of the bracket 3 (see Fig. 4).

At both side portions in a width direction of the pasting portion 61, engaging wall portions 62 and 62 for engaging and supporting the prism 6 in the case 7 are formed to extend to a case 7-side.

The engaging wall portions 62 and 62 respectively extend in a straight line along side edges of the pasting portion 61, and engaging projections 62a are provided on outer peripheral surfaces of the engaging wall portions 62 and 62 to protrude outward in a radial direction (see Fig. 1 and Fig. 2B).

As shown in Fig. 2B, in the embodiment, the prism 6 is attached to the case 7 by inserting the engaging wall portions 62 and 62 into an inner side of side wall portions 72 and 72 of the case 7, and on this occasion, the engaging projections 62a and 62a on the prism 6 side are engaged with engaging holes 72a and 72a that are provided in the side wall portions 72 and 72 on the case 7-side, whereby the prism 6 is inhibited from falling off from the case 7.

In the prism 6, a light guide portion 63 is provided between the engaging wall portions 62 and 62, and as shown in Figs. 2A and 2B, the light guide portion 63 has light-emitting side lens portions 64 and 64 on which light emitted from the light-emitting elements 91 and 91 is incident, and a light-receiving side lens portion 65 that guides light reflected by the windshield glass 2 to a light-receiving element 92.

A lens diameter Da of each of the light-emitting side lens portions 64 and 64 is set at a diameter larger than a lens diameter Db of the light-receiving side lens portion 65, and a detection region DR for raindrops by the light-receiving element 92 is set to be narrower in contrast with an irradiation region IR of light in the windshield glass 2.

This is for the purpose of preventing the detection region for raindrops from deviating from the irradiation region of light by setting the detection region for raindrops to be narrow because the irradiation region IR of the light from the light-emitting element 91 displaces in the lateral direction in the figure in response to a thickness Wa of the windshield glass 2 on which the raindrop sensor 1 is mounted.

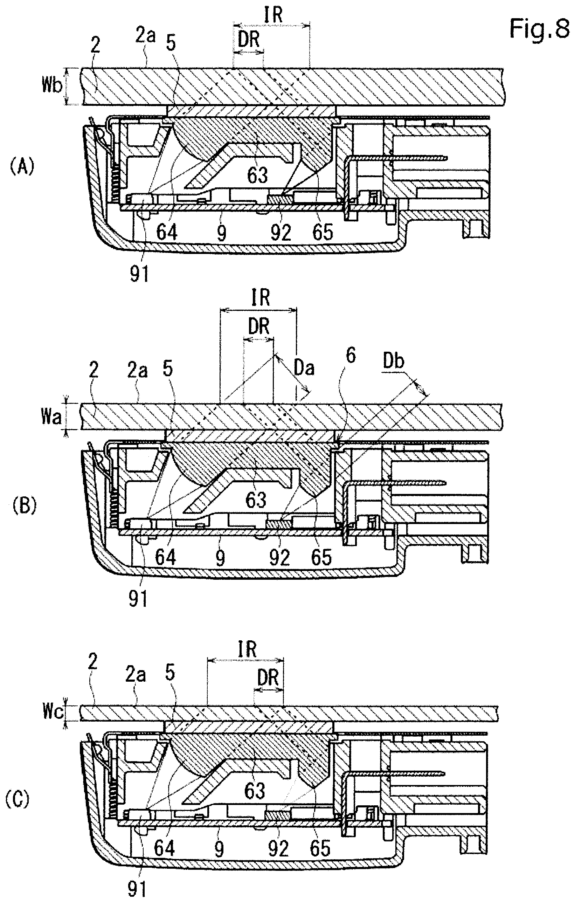

Here, a relation of the irradiation region IR of light and the detection region DR for raindrops will be described with reference to Figs. 8A to 8C. Figs. 8A to 8C are views explaining a relation of a variation in thickness of the windshield glass 2, and the irradiation region IR of light and the detection region DR for raindrops. Fig. 8A shows a case in which the thickness of the windshield glass 2 is a thickness Wb larger than the reference thickness Wa shown in Fig. 8B, Fig. 8B shows a case in which the thickness of the windshield glass 2 is the reference thickness Wa, and Fig. 8C shows a case in which the thickness of the windshield glass 2 is a thickness Wc smaller than the reference thickness Wa shown in Fig. 8B, respectively.

The light that is emitted from the light-emitting element 91 and is incident on the inside of the light guide portion 63 from the light-emitting side lens portion 64 is refracted by the light-emitting side lens portion 64 to be parallel light in a direction of approximately 45° with respect to the surface 2a of the windshield glass 2. A refraction index of the prism 6, a refraction index of the optical contact 5, and a refraction index of the windshield glass 2 are substantially the same, and the parallel light that is refracted by the light-emitting side lens portion 64 reaches the surface 2a of the windshield glass 2 while keeping the angle, and forms the irradiation region IR of the light with a predetermined width that is determined in accordance with the lens diameter Da, on the surface 2a of the windshield glass 2.

In this case, the width of the irradiation region IR of light is approximately 1.4 times as large as the lens diameter Da.

The parallel light which reaches the surface 2a of the windshield glass 2 is totally reflected on the surface 2a due to a difference between the refraction index (approximately 1.5) of the windshield glass 2 and the refraction index (approximately 1.0) of air, and remains to be parallel light to return into the prism 6.

Subsequently, the parallel light is totally reflected on a wall portion at a right side of the light guide portion 63, and reaches the light-receiving side lens portion 65. The parallel light that reaches the light-receiving side lens portion 65 is refracted by the light-receiving side lens portion 65 and are collected and condensed by the light-receiving element 92.

In this case, a range of the parallel light which is refracted at the light-receiving side lens portion 65 (the detection region DR for raindrops by the light-receiving element 92) is a predetermined width determined in accordance with a lens diameter Db of the light-receiving side lens portion 65, and the predetermined width is approximately 1.4 times as large as the lens diameter Db.

In this case, if the thickness of the windshield glass 2 is the thickness Wb which is larger than the reference thickness Wa, the irradiation region IR of light moves in a direction to be away from the light-emitting element 91 (the right direction in the figure) (see Fig. 8A), and when the thickness of the windshield glass 2 becomes the thickness Wc which is smaller than the reference thickness Wa, the irradiation region IR of light moves in a direction to be close to the light-emitting element 91 (left direction in the figure) (see Fig. 8C).

Therefore, in the embodiment, the lens diameter Da of the light-emitting side lens portion 64 and the lens diameter Db of the light-receiving side lens portion 65 are set so that when the thickness of the windshield glass 2 is the reference thickness Wa, the detection region DR for raindrops is set substantially in the center of the irradiation region of the irradiation region IR of light, and when the thickness of the windshield glass 2 is within an error range of the reference thickness Wa (between the thickness Wc and the thickness Wb), the detection region DR for raindrops can be prevented from deviating from the irradiation region of the irradiation region IR of light (see Fig. 8B).

For example, in the embodiment, the lens diameter Da and the lens diameter Db are set to satisfy the following condition: the lens diameter Da of the light-emitting side lens portion 64 - the lens diameter Db of the light-receiving side lens portion 65 ≥ 1.0 mm / 1.4 (Da-Db≥1.0 mm/1.4), when the error of the thickness of the windshield glass 2 is ±0.5 mm.

Thereby, the detection region DR for raindrops can be reliably positioned in the irradiation region IR of light when the thickness of the windshield glass 2 is within the predetermined error range. Accordingly, even if an error exits in the thickness of the windshield glass 2, the detection region DR for raindrops becomes within the irradiation region IR of light, and therefore, optical stability of the raindrop sensor 1 is improved.

It should be noted that it is also conceivable to make the lens diameter Db of the light-receiving side lens portion 65 larger than the lens diameter Da of the light-emitting side lens portion 64, in this case, however, noise light such as sunlight is easily incident thereon, and therefore, optical performance is reduced.

As shown in Fig. 2A, an opening 71a is formed in a base portion 71 of the case 7 to which the prism 6 is attached in order to ensure a route of light that travels to the prism 6 from the light-emitting elements 91 and 91, and a route of light that travels to the light-receiving element 92 from the prism 6, and the substrate 9 including the light-emitting element 91 and the light-receiving element 92 is mounted on a surface at a side opposite to the prism 6 in the base portion 71.

Therefore, in the raindrop sensor 1 according to the embodiment, the light emitted from the light-emitting element 91 is incident on the inside of the light guide portion 63 from the light-emitting side lens portion 64 through the opening 71a provided in the base portion 71, and thereafter, passes through the light guide portion 63 and the optical contact 5 to be reflected by the surface 2a of the windshield glass 2. Subsequently, the light reflected by the windshield glass 2 passes through the optical contact 5 and the light guide portion 63 again, and thereafter is received by the light-receiving element 92 via the opening 71a from the light-receiving side lens portion 65.

As shown in Fig. 1 and Fig. 2A, the substrate 9 is mounted to an undersurface of the case 7 by being locked by a locking claw 75 that extends downward at the side opposite to the prism 6 from a side edge portion of the case 7, and one end 76a of a connector terminal 76 that forms an L-letter shape in a side view is connected to one side in a longitudinal direction of the substrate 9.

The connector terminal 76 extends in a direction orthogonal to the substrate 9 in the base portion 71 of the case 7, and thereafter, extends parallel to the substrate 9 toward a connector portion 77 that is adjacent to the base portion 71, and the other end 76b of the connector terminal 76 is located in a cylindrical wall 771 of the connector portion 77 (see Fig. 2A and Fig. 3B).

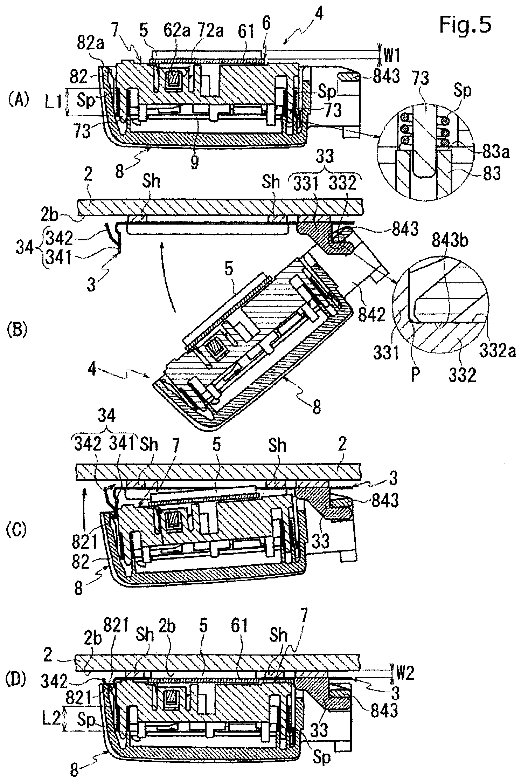

Figs. 5A to 5D are views explaining assembly of the raindrop sensor main body 4 to the bracket 3. Fig. 5A is a sectional view of the raindrop sensor main body 4 before assembled to the bracket 3. Fig. 5B is a view showing a state in which the latch portion 843 at the raindrop sensor main body 4 side is locked to the locking portion 33 of the bracket 3. Fig. 5C is a view showing a state directly before the engaging projection 821 at the raindrop sensor main body 4-side is snap-engaged with the elastic engaging portion 342 of the bracket 3. Fig. 5D is a view showing a state in which the raindrop sensor main body 4 is mounted to the bracket 3.

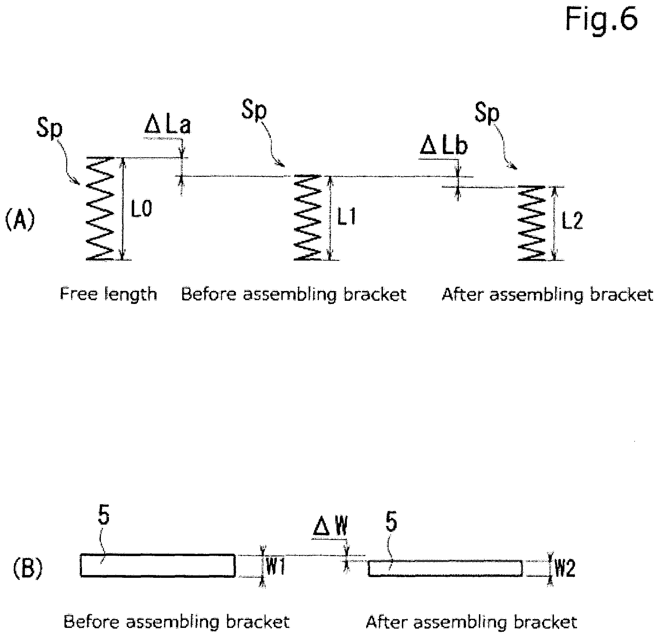

Figs. 6A and 6B are diagrams schematically explaining a compression state of the spring Sp and the optical contact 5. Fig. 6A is a diagram schematically showing a change of the compression state of the spring Sp. Fig. 6B is a diagram schematically showing a change of the compression state of the optical contact 5.

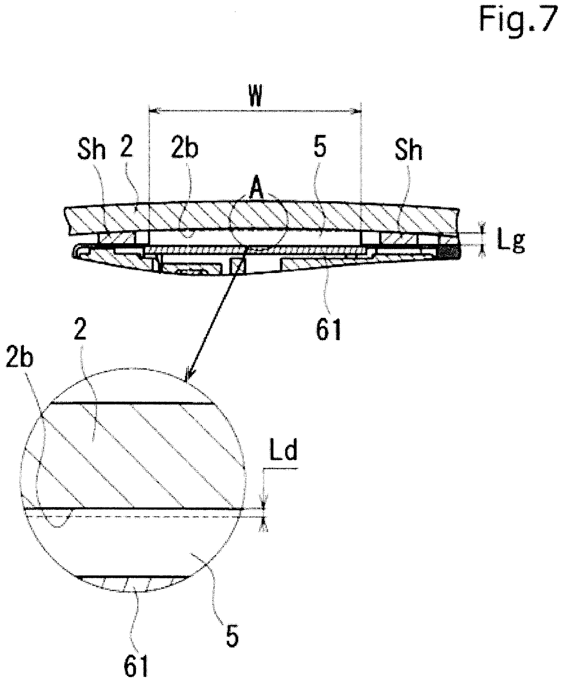

Fig. 7 is a view explaining an error amount by the windshield glass 2.

As shown in Fig. 1, support shafts 73 for the springs Sp are provided at four corners of the base portion 71 of the case 7. The support shaft 73 extends in a straight line toward a lower part at the cover 8-side, and one end side of the spring Sp is mounted to each of the support shafts 73 by being fitted over each of the support shafts 73.

The spring Sp has a free length L0 (see a free length in Fig. 6A), wherein in a state in which one end side thereof is fitted on the support shaft 73, the other end side protrudes downward of the cover 8-side.

In the embodiment, when the case 7 and the cover 8 are assembled by engaging an engaging claw 72b provided at a side wall portion 72 of the case 7 with an engaging recessed portion 82b provided in a peripheral wall portion 82 of the cover 8, a tip end side of the support shaft 73 is inserted into a support stand 83 in a cylindrical shape provided on a wall portion 81 of the cover 8 (see Fig. 5A).

In this state, the other end at the cover 8-side, of the spring Sp is pressed by an upper end 83a (see Fig. 3A) of the support stand 83, and the spring Sp is compressed in the axial direction until a length of the spring Sp becomes from the free length L0 to a predetermined length L1 (see Fig. 5A and before bracket assembly in Fig. 6A).

In this state, the case 7 is supported by the cover 8 in a state movable in the vertical direction, and disposes the pasting portion 61 of the prism 6 which is assembled to the case 7 at a position protruding upward from an upper end 82a of the peripheral wall portion 82 of the cover 8.

As shown in Fig. 4, the springs Sp are provided at positions symmetrical across a center line Lm of the optical contact 5 in the longitudinal direction of the bracket 3 by being spaced in the width direction of the optical contact 5. The respective springs Sp are located in corners of a virtual line Im in a quadrangular shape surrounding the optical contact 5, so that urging forces from the respective springs Sp uniformly act on the optical contact 5, and the optical contact 5 is brought into pressure contact with the windshield glass 2 with uniform loads throughout the entire surface thereof.

As shown in Fig. 1, in the cover 8, a connector cover portion 84 is integrally formed in the peripheral wall portion 82 that surrounds an outer periphery of the case 7. The connector cover portion 84 extends sideway of the peripheral wall portion 82 along an extending direction of the connector portion 77, and has a wall portion 841 that covers an undersurface of the cylindrical wall 771 of the connector portion 77, and side wall portions 842 and 842 that cover both sides of the cylindrical wall 771.

The wall portion 841 of the connector cover portion 84 is located at an upper part at a windshield glass 2-side from the wall portion 81 of the cover 8, and the side wall portion 842 of the connector cover portion 84 is located inward from the peripheral wall portion 82 of the cover 8, seen from the protruding direction side of the connector cover portion 84.

At tip end portions of the side wall portions 842 and 842, the latch portions 843 that are latched and locked to the mounting portion 30 of the bracket 3 described above are provided. The latch portions 843 and 843 are provided to protrude sideward from the side wall portions 842, and each has a predetermined thickness Wx in a height direction of the side wall portion 842, as shown in Fig. 3A.

A lower side 843a of the latch portion 843 extends in a straight line to the peripheral wall portion 82-side from a tip end of the side wall portion 842, and a peripheral wall portion 82 side (left side in the figure) of the lower side 843a becomes an inclined surface 843b in a direction in which thicknesses of the latch portions 843 and 843 become thinner toward the peripheral wall portion 82.

As shown in Fig. 1 and Fig. 4, at a base end side of the side wall portion 842, outer wall portions 844 and 844 parallel to the side wall portion 842 are provided. The outer wall portions 844 and 844 extend in a straight line along the side wall portion 842, in positions separated sideway from the side wall portions 842 and 842.

In the embodiment, when the latch portion 843 is latched and locked to the mounting portion 30 of the bracket 3, the locking portion 33 (base portion 331) of the mounting portion 30 is inserted between the outer wall portion 844 and the side wall portion 842, and positioning of the cover 8 in the width direction of the bracket 3 is performed.

Therefore, at tip end portions of the outer wall portions 844 and 844, reinforcement walls 844a and 844a that extend in directions to separate from the side wall portions 842 and 842 are provided, and rigidity strength of the outer wall portions 844 and 844 is enhanced by the reinforcement walls 844a and 844a.

Hereinafter, assembly of the raindrop sensor main body 4 to the bracket 3 will be described.

When the case 7 in which the prism 6 and the substrate 9 are assembled is assembled to the cover 8 to construct the raindrop sensor main body 4 first, the springs Sp which support the case 7 are compressed in the axial direction until the length thereof becomes the predetermined length L1 from the free length L0 (see Fig. 5A and Fig. 6A).

In this state, the case 7 is supported by the cover 8 in the state movable in the vertical direction in Fig. 5A, and disposes the pasting portion 61 of the prism 6 which is assembled to the case 7 in the position protruding upward from the upper end 82a of the peripheral wall portion 82 of the cover 8.

As shown in Fig. 5B, the bracket 3 is pasted on and fixed to the inner surface 2b at the vehicle interior side, of the windshield glass 2, via the adhesive sheet Sh, and when the raindrop sensor main body 4 is mounted to the bracket 3, the latch portions 843 provided at the cover 8 of the raindrop sensor main body 4 are locked to the locking portions 33 of the bracket 3 first.

On this occasion, the raindrop sensor main body 4 is locked to the locking portions 33 in an orientation in which the inclined surfaces 843b of the latch portions 843 are along the top surfaces 332a of the extending portions 332 of the locking portions 33.

Subsequently, the raindrop sensor main body 4 is rotated with the vicinity of an intersection P between the base portion 331 and the extending portion 332 in the locking portion 33 as a fulcrum, and the optical contact 5 is rotated to a direction to access to the opening 31 of the bracket 3 (see the arrow in the figure).

Thereupon, the engaging portion 34 (frame portion 341) provided at the bracket 3 is inserted into the gap between the cover 8 and the case 7, and the engaging projection 821 provided at the peripheral wall portion 82 of the cover 8 engages with the elastic engaging portion 342 while elastically deforming the elastic engaging portion 342 of the engaging portion 34, whereby mounting of the raindrop sensor main body 4 to the bracket 3 is completed (see Figs. 5C and D).

On this occasion, the optical contact 5 is compressed between the inner surface 2b of the windshield glass 2 and the pasting portion 61 of the prism 6, and is compressed to a thickness W2 that is smaller than a thickness W1 before compression. Further, the spring Sp which supports the case 7 with the cover 8 is also compressed between the case 7 and the cover 8, and is compressed from a length L1 at the time of supporting the case 7 with the cover 8 to a length L2 that is shorter than the length L1 (see Fig. 5D).

It should be noted that the optical contact 5 is brought into pressure contact with the windshield glass 2 from the fulcrum side (the right side in the figure) of rotation of the raindrop sensor main body 4. As a result, the optical contact 5 is in pressure contact with the windshield glass 2 while pushing out the air bubbles existing between the optical contact 5 and the windshield glass 2 to the engaging projection 821-side (the left side in the figure), and therefore, when mounting of the raindrop sensor main body 4 to the bracket 3 is completed, the air bubbles existing between the optical contact 5 and the windshield glass 2 can be decreased.

In the embodiment, a compression spring constant k1 of the spring Sp is set at a value smaller than a compression spring constant k2 of the optical contact 5, and thereby a compression amount (ΔW=W1-W2) of the optical contact 5 becomes smaller than a compression amount of the spring Sp (ΔLb=L1-L2) when the raindrop sensor main body 4 is mounted to the bracket 3 while the optical contact 5 is brought into pressure contact with the inner surface 2b of the windshield glass 2 (ΔLb<ΔW).

The compression amount (ΔLb=L1-L2) of the spring Sp at this time is set to be smaller than a compression amount (ΔLa=L0-L1) of the spring Sp at the time of supporting the case 7 with the cover 8 (ΔLb<ΔLa).

Here, loads that act on the spring Sp and the optical contact 5 will be described.

When a change amount of the compression amount of the spring Sp due to a variation amount ΔF of a load is set as ΔLb, a change amount of the compression amount of the optical contact 5 due to the variation amount ΔF of a load is set as ΔW, and the change amount of the total compression amount due to the variation amount ΔF of a load is set as ΔX, with the compression spring constant of the spring Sp set as k1 and the compression spring constant of the optical contact 5 set as k2, ΔLb=ΔF/k1, ΔW=ΔF/k2, and ΔX=ΔLb+ΔW are satisfied.

Here, when ΔF=1, k1=1 and k2=10, for example, ΔLb=1, ΔW=0.1 and ΔX=1.1 are made, a influence degrees of the change amount ΔLb of the compression amount of the spring Sp and the change amount ΔW of the compression amount of the optical contact 5, to the change amount ΔX of the total compression amount are such that the influence degree of the spring Sp ΔLb/ΔX=90%, and the influence degree of the optical contact 5 ΔW/ΔX=10%.

Accordingly, if the compression spring constant k1 of the spring Sp is set at a value sufficiently smaller than the compression spring constant k2 of the optical contact 5, the influence of the variation in the compression amount of the optical contact 5 becomes small with respect to a displacement error such as a bonding error of the bracket 3 in the parallel direction with the windshield glass 2, and optical performance in the raindrop sensor 1 is stabilized.

In the raindrop sensor according to the embodiment, the compression spring constant k2 of the optical contact 5 is set to be 1/5 of the compression spring constant k1 of the spring Sp or less, more preferably 1/10 of the compression spring constant k1 or less, so that the influence degree of the optical contact 5 becomes 20% or less.

Further, in the embodiment, a minimum compression amount (stroke amount) of the spring Sp at the time of mounting the raindrop sensor main body 4 to the bracket 3 is set so that when the raindrop sensor main body 4 is mounted to the bracket 3, the compression amount (ΔLb=L1-L2) of the spring Sp becomes larger than a value obtained by adding up an error amount (error amount Ld) in the mounting direction of the raindrop sensor main body 4, which is determined in accordance with a curvature of the windshield glass 2, and an error amount Lg in the mounting direction of the adhesive sheet Sh which is used in fixation of the bracket 3 to the windshield glass 2, as shown in Fig. 7.

As shown in Fig. 7, in the windshield glass 2 for a vehicle, the inner surface 2b on which the raindrop sensor 1 is mounted forms a concave curved surface. Here, when a radius of the curved surface of the windshield glass 2 is R 2500 mm, and a width W of a contact surface of the optical contact 5 is 30 mm, the error amount becomes Ld=0.05 mm (50 µm).

Consequently, the stroke amount of the spring Sp necessary to bring the optical contact 5 into close contact with the windshield glass 2 along the curved surface of the windshield glass 2 is 0.05 mm (50 µm).

When a variation Lg (a variation in the direction to bring the optical contact 5 into pressure contact with the windshield glass 2) in a bonding height by the adhesive sheet Sh between the windshield glass 2 and the bracket 3 is ±0.25 mm, the required stroke amount of the spring is 0.50+0.05=0.55 (approximately 0.6 mm).

Accordingly, the optical contact 5 can be reliably brought into pressure contact with the windshield glass 2 by making the minimum compression amount of the spring Sp at the time of mounting the raindrop sensor main body 4 to the bracket 3 (stroke amount: change amount ΔLb_min) larger than a stroke amount calculated from the radius of the curved surface of the windshield glass 2, the error amount Ld determined in accordance with the width W of the contact surface of the optical contact 5, and the variation Lg in the bonding height by the adhesive sheet Sh, and therefore, the optical performance in the raindrop sensor 1 is stabilized.

Further, in the raindrop sensor 1 of the embodiment, the compression amount (ΔLb=L1-L2) of the spring Sp at the time of mounting the raindrop sensor main body 4 to the bracket 3 is set to be sufficiently smaller than the compression amount (ΔLa=L0-L1) of the spring Sp at the time of supporting the case 7 by assembling the case 7 to the cover 8.

In the raindrop sensor according to the embodiment, the compression amount ΔLb of the spring Sp at the time of mounting the raindrop sensor main body 4 to the bracket 3 is set to be 1/5 of the compression amount ΔLa of the spring Sp at the time of supporting the case 7 by assembling the case 7 to the cover 8 or less, preferably 1/10 of the compression amount ΔLa, or less.

Here, the influence of the error in the mounting height of the bracket 3, and the minimum load that acts on the optical contact 5 will be described with the compression spring constant k1 of the spring Sp set as 0.5 kg/mm, the compression spring constant k of the optical contact 5 set as 2.5 kg/mm, the compression amount ΔLa of the spring Sp at the time of supporting the case 7 by assembling the case 7 to the cover 8 set as 5 mm, and the compression amount ΔLb of the spring Sp at the time of mounting the raindrop sensor main body 4 to the bracket 3 set as 1 mm.

Before the raindrop sensor main body 4 is mounted to the bracket 3, a load F0 that acts on the spring Sp is F0=k1 x5 mm=2.5 kg.

After the raindrop sensor main body 4 is mounted to the bracket 3, a load F1 that acts on the spring Sp is F1=k1 ×(5+1) mm=3 kg.

A load error ΔF (error of a load that acts on the optical contact) due to an error of the mounting height of the bracket 3 and the like at the time of mounting the raindrop sensor main body 4 to the bracket 3 is 0.5 kg (=3 kg-2.5 kg).

Here, an error Δx of the compression amount of the optical contact 5 to the load error (0.5 kg) is Δx=ΔF/k2=0.5/5=0.1 mm.

Accordingly, in this case, the influence of the error 1 mm of the mounting height of the bracket 3 is reduced to 0.1 mm, and the minimum load that acts on the optical contact is 2.5 kg.

### [Comparative example 1]

An influence of an error of a mounting height of the bracket 3 and a minimum load that acts on the optical contact 5, in the case of a comparative example in which the free length L0 of the spring Sp is made short, and the compression amount (ΔLa=L0-L1) of the spring Sp at the time of supporting the case 7 by assembling the case 7 to the cover 8 and the compression amount (ΔLb=L1-L2) of the spring Sp at the time of mounting the raindrop sensor main body 4 to the bracket 3 are made the same will be described.

When the compression spring constant k1 of the spring Sp is set at 0.5 kg/mm, the compression spring constant k of the optical contact 5 is set at 2.5 kg/mm, the compression amount Δa of the spring Sp at the time of supporting the case 7 by assembling the case 7 to the cover 8 is set at 1 mm, and the compression amount ΔLb of the spring Sp at the time of mounting the raindrop sensor main body 4 to the bracket 3 is set at 1 mm,
the load F0 that acts on the spring Sp before the raindrop sensor main body 4 is mounted to the bracket 3 is F0=k1 x1 mm=0.5 kg.

After the raindrop sensor main body 4 is mounted to the bracket 3, the load F1 that acts on the spring Sp is F1 =k1 x(1 +1) mm=1 kg.

The load error ΔF by an error of the mounting height of the bracket 3 and the like at the time of mounting the raindrop sensor main body 4 to the bracket 3 is 0.5 kg (=1 kg-0.5 kg).

The error Δx of the compression amount of the optical contact 5 to the load error (0.5 kg) is Δx=ΔF/k2=0.5/5=0.1 mm.

Accordingly, when the compression amount (ΔLa=L0-L1) of the spring Sp at the time of supporting the case 7 by assembling the case 7 to the cover 8, and the compression amount (ΔLb=L1-L2) of the spring Sp at the time of mounting the raindrop sensor main body 4 to the bracket 3 are made the same, the minimum load that acts on the optical contact 5 reduces to 0.5 kg, although the influence of the error of 1 mm of the mounting height of the bracket 3 is reduced to 0.1 mm.

### [Comparative example 2]

An influence of an error of a mounting height of the bracket 3, and a minimum load that acts on the optical contact 5 will be described in a case of a comparative example in which the spring constant of the spring Sp is made large, and a difference between the compression spring constant of the spring and the compression spring constant of the optical contact 5 is reduced.

When the compression spring constant k1 of the spring Sp is set at 2.5 kg/mm, the compression spring constant k2 of the optical contact 5 is set at 5 kg/mm, the compression amount ΔLa of the spring Sp at the time of supporting the case 7 by assembling the case 7 to the cover 8 is set at 1 mm, and the compression amount ΔLb of the spring Sp at the time of mounting the raindrop sensor main body 4 to the bracket 3 is set at 1 mm,
the load F0 that acts on the spring Sp, before mounting the raindrop sensor main body 4 to the bracket 3 is F0=k1 x1 mm=2.5 kg.

The load F1 that acts on the spring Sp after mounting the raindrop sensor main body 4 to the bracket 3 is F1=k1 x(1 +1) mm=5 kg.

The load error ΔF due to an error of the mounting height of the bracket 3 and the like at the time of mounting the raindrop sensor main body 4 to the bracket 3 is 2.5 kg (=5 kg-2.5 kg).

The error Δx of the compression amount of the optical contact 5 with respect to the load error (2.5 kg) is Δx=ΔF/k2=2.5/5=0.5 mm.

Accordingly, when the difference between the compression spring constant of the spring and the compression spring constant of the optical contact 5 is made small, the influence of the error of 1 mm of the mounting height of the bracket 3 is 0.5 mm, and the influence of the error becomes larger than in the case of the embodiment described above.

As above, as in the raindrop sensor 1 according to the embodiment, the compression amount (ΔLb=L1-L2) of the spring Sp at the time of mounting the raindrop sensor main body 4 to the bracket 3 is set to be sufficiently smaller than the compression amount (ΔLa=L0-L1) of the spring Sp at the time of supporting the case 7 by assembling the case 7 to the cover 8, and the compression spring constant k1 of the spring Sp is made sufficiently smaller than the compression spring constant k2 of the optical contact 5, whereby the influence of the error of the mounting height of the bracket 3 can be restricted while the minimum load that acts on the optical contact 5 is ensured, and therefore, the raindrop sensor 1 which is stable in the optical performance can be provided.

As above, in the embodiment, a raindrop sensor 1 in which a prism 6 (light guide member) that guides the light emitted from the light-emitting element 91 to the windshield glass 2 and guides the light reflected at the surface 2a of the windshield glass 2 to the light-receiving element 92 is mounted to the windshield glass 2 via the optically transparent optical contact 5 (elastic member), includes
the bracket 3 configured to be fixed to the windshield glass 2,
the cover 8 configured to be attachable to and detachable from the bracket 3, and
the spring Sp (support member) configured to support the prism 6 in the cover 8 to be capable of advancing and retracting in the mounting direction to the windshield glass 2,
the optical contact 5 is configured by a gas-permeable silicon sheet containing silicon oil,
when the cover 8 is mounted to the bracket 3, the spring Sp and the optical contact 5 are compressed in the mounting direction, and the prism 6 is brought into pressure contact with the windshield glass 2 via the optical contact 5, and
a compression spring constant k1 of the spring Sp is set at a value smaller than a compression spring constant k2 of the optical contact 5, and a compression amount ΔW (see Fig. 6) in the mounting direction of the optical contact 5 at the time of mounting the cover 8 to the bracket 3 is made smaller than a compression amount ΔLb (see Fig. 6) in the mounting direction of the spring Sp.

The optical contact 5 is a gas-permeable silicon sheet containing silicon oil, and the gas-permeable silicon sheet has the property of eliminating air bubbles existing between the silicon sheet, and the windshield glass 2 and the pasting portion 61, as a result that gas components are discharged to outside through the inside of the silicon sheet after a time elapses with a very small load (loading) acting on the silicon sheet, even if the air bubbles (gas components) exist between the silicon sheet, and the windshield glass 2 and the pasting portion 61 with which the silicon sheet is in contact.

Therefore, by only bringing the optical contact 5 into pressure contact with the windshield glass 2 by applying a very small load, the air bubbles existing between the optical contact 5 and the windshield glass 2 can be removed. Accordingly, since it is not necessary to bring the optical contact 5 into pressure contact with the windshield glass 2 by applying a large load, as in the conventional raindrop sensor, the load that is required when the raindrop sensor 1 is mounted to the windshield glass 2 can be reduced, and therefore, a mounting operation of the raindrop sensor 1 can be facilitated.

Further, the compression amount ΔW in the mounting direction of the optical contact 5 at the time of mounting the cover 8 to the bracket 3 becomes smaller than the compression amount ΔLb in the mounting direction of the spring Sp, and therefore, even if the optical contact 5 is brought into pressure contact with the windshield glass 2 by applying a very small load, the influence of the error in the mounting direction of the optical contact 5 to the windshield glass 2 can be decreased.

Accordingly, even if the optical contact 5 is brought into pressure contact with the windshield glass 2 by applying a very small load, the optical performance of the raindrop sensor 1 can be favorably prevented from being reduced by the influence of the error in the mounting direction.

The compression amount ΔLb of the spring Sp at the time of mounting the cover 8 to the bracket 3 is set to be larger than a value obtained by adding up an error amount Ld (error amount) in the mounting direction that is determined in accordance with a curvature of the windshield glass 2, and an error amount Lg (error in the bonding height) in the mounting direction of the bracket 3 that is fixed to the windshield glass 2.

By the above configuration, the optical contact 5 can be brought into pressure contact with the windshield glass 2 without receiving the influence of the error amount of the windshield glass 2, and the error in the bonding height of the bracket, and therefore, the optical performance of the raindrop sensor 1 can be favorably prevented from reducing by receiving the influence of the error in the mounting direction.

Before the cover 8 is mounted to the bracket 3, the spring Sp supports the prism 6 to be capable of advancing and retracting in the mounting direction in a state in which the spring Sp is compressed from a free length L0 (see Fig. 6A) of the spring SP to a length L1, and
the compression amount of the spring Sp (ΔLb=L1-L2) at the time of mounting the cover 8 to the bracket 3 is set to be smaller than a compression amount of the spring Sp (ΔLa=L0-L1) before mounting of the cover 8 to the bracket 3.

By the configuration as above, the load which is required at the time of mounting the cover 8 to the bracket 3 can be restricted, and therefore, mounting of the raindrop sensor 1 to the windshield glass 2 can be facilitated.

The prism 6 is provided to advance and retract in the mounting direction integrally with a case 7 by being assembled to the case 7 that is supported to be capable of advancing and retracting in the mounting direction in the cover 8, and
the spring Sp is configured to support the case 7 to be capable of advancing and retracting in the mounting direction, and support two pairs of spots that are spaced in a width direction of the prism 6 and are positions that are symmetrical around the center of the optical contact 5, which is pasted on the surface (pasting portion 61), at the windshield glass 2-side, of the prism 6, seen from the mounting direction.

By the configuration as above, urging forces act uniformly onto the optical contact 5 from the springs Sp which are provided at the four spots in total, and the optical contact 5 is brought into pressure contact with the windshield glass 2 with a uniform load throughout an entire surface thereof. Therefore, the optical performance of the raindrop sensor 1 is stabilized.

The cover 8 is configured such that after the latch portion 843 provided at one end side in the longitudinal direction of the cover is locked to the locking portion 33 provided at the bracket 3, the other end side in the longitudinal direction is rotated in the circumferential direction around the engaging point P of the latch portion 843 and the locking portion 33, and while the optical contact 5 is compressed in the mounting direction from the one end side (latch portion 843-side), the cover 8 is mounted to the bracket 3.

By the configuration as above, while the air bubbles existing in the contact interface between the optical contact 5 and the windshield glass 2 are pushed away to the other end side, the optical contact 5 can be brought into pressure contact with the windshield glass 2, and therefore, the content of the air bubbles in the contact interface directly after the cover 8 is mounted to the bracket 3 and the optical contact 5 is brought into pressure contact with the windshield glass 2 can be decreased.

The prism 6 includes the light-emitting side lens portion 64 on which the light emitted by the light-emitting element 91 is incident, and the light-receiving side lens portion 65 that causes the light reflected at the windshield glass 2 to exit to the light-receiving element 92, and the lens diameter Da of the light-emitting side lens portion 64 is set to be a diameter larger than the lens diameter Db of the light-receiving side lens portion 65.

By the configuration as above, the detection region DR for the raindrops by the light-receiving element 92 becomes narrower in contrast with the irradiation region IR of light in the windshield glass 2, and therefore, even if the irradiation region IR of the light displaces in response to the thickness Wa of the windshield glass 2 to which the raindrop sensor 1 is mounted, the detection region for raindrops can be prevented from deviating from the irradiation region of light. While only the selected embodiment has been chosen to illustrate the present invention, it will be apparent to those skilled in the art from this disclosure that various changes and modifications can be made therein without departing from the scope of the invention as defined in the appended claims. Furthermore, the foregoing description of the embodiment according to the present invention is provided for illustration only, and not for the purpose of limiting the invention as defined by the appended claims.

### Description of Reference Signs

1 Raindrop sensor
2 Windshield glass
2a Surface
2b Inner surface
3 Bracket
4 Raindrop sensor main body
5 Optical contact
6 Prism
7 Case
8 Cover
9 Substrate
30 Mounting portion
31 Opening
32 Reinforcing wall portion
33 Locking portion
34 Engaging portion
61 Pasting portion
62 Engaging wall portion
62a Engaging projection
63 Light guide portion
64 Light-emitting side lens portion
65 Light-receiving side lens portion
71 Base portion
71a Opening
72 Side wall portion
72a Engaging hole
72b Engaging claw
73 Support shaft
75 Locking claw
76 Connector terminal
76a One end
76b The other end
77 Connector portion
81 Wall portion
82 Peripheral wall portion
82a Upper end
82b Engaging recessed portion
83 Support stand
83a Upper end
84 Connector cover portion
91 Light-emitting element
92 Light-receiving element
322a Top surface
331 Base portion
332 Extending portion
332a Side edge
341 Frame portion
342 Elastic engaging portion
342a Engaging hole
771 Cylindrical wall
821 Engaging projection
841 Wall portion
842 Side wall portion
842a Reinforcing wall
843 Latch portion
843a Lower side
843b Inclined surface
844 Outer wall portion
A Surface
Da Lens diameter
Db Lens diameter
DR Detection region
F0 Load
F1 Load
IR Irradiation region
Im virtual line
L0 Free length
Lm Center line
P Intersection
P engaging point
Sh Adhesive sheet
Sp Spring
W Width
k Constant, k1 Constant, k2 Constant

## Claims

1. A raindrop sensor in which a light guide member is mounted to a windshield glass (2) through an optically transparent elastic member (5), wherein the light guide member guides light emitted from a light-emitting element (91) to the windshield glass (2) and guides light reflected at the windshield glass to a light-receiving element (92),
the raindrop sensor comprising:
a bracket (3) configured to be fixed to the windshield glass (2);
a cover (8) configured to be attachable to and detachable from the bracket (3); and
a support member configured to support the light guide member in the cover (8) to be capable of advancing and retracting in a mounting direction to the windshield glass (2),
when the cover (8) is mounted to the bracket (3), the support member and the elastic member (5) are compressed in the mounting direction, and the light guide member is brought into pressure contact with the windshield glass (2) via the elastic member (5),
**characterized in that**
the elastic member (5) is configured by a gas-permeable silicon sheet containing silicon oil, and
a compression spring constant (K1) of the support member is set at a value smaller than a compression spring constant (k2) of the elastic member (5), so that a compression amount in the mounting direction of the elastic member (5) at the time of mounting the cover (8) to the bracket (3) becomes smaller than a compression amount in the mounting direction of the support member.

2. The raindrop sensor according to claim 1, **characterized in that**
the compression amount of the support member at the time of mounting the cover (8) to the bracket (3) is made larger than a value obtained by adding up an error amount in the mounting direction that is determined in accordance with a curvature of the windshield glass (2), and an error amount in the mounting direction of the bracket that is fixed to the windshield glass (2).

3. The raindrop sensor according to claim 1 or claim 2, **characterized in that** before the cover (8) is mounted to the bracket (3), the support member supports the light guide member to be capable of advancing and retracting in the mounting direction in a state in which the support member is compressed from a free length of the support member, and
the compression amount of the support member at the time of mounting the cover (8) to the bracket (3) is made smaller than a compression amount of the support member before mounting of the cover to the bracket.

4. The raindrop sensor according to claim 1 or claim 2, **characterized in that**
the light guide member is provided to advance and retract in the mounting direction integrally with a case (7) by being assembled to the case (7) that is supported to be capable of advancing and retracting in the mounting direction in the cover (8), and
the support member supports the case (7) to be capable of advancing and retracting in the mounting direction, and supports positions that are symmetrical across a center of the elastic member, which is pasted on a surface, at the windshield glass side, of the light guide member, seen from the mounting direction.

5. The raindrop sensor according to claim 1 or claim 2, **characterized in that**
the cover (8) is configured to be mounted to the bracket (3) in such a manner that after a latch portion (843) provided at-one end side in a longitudinal direction of the cover (8) is locked to a locking portion (33) provided at the bracket (3), the other end side in the longitudinal direction is rotated in a circumferential direction around an engaging point (P) of the latch portion (843) and the locking portion (33), and while the support member and the elastic member are compressed in the mounting direction from the one end side, the cover (8) is mounted to the bracket (3).

6. The raindrop sensor according to claim 1 or claim 2, **characterized in that**
the light guide member comprises a light-emitting side lens portion (64) on which the light emitted by the light-emitting element (91) is incident, and a light-receiving side lens portion (65) that causes the light reflected at the windshield glass (2) to exit to the light-receiving element (92), and
a lens diameter of the light-emitting side lens portion (64) is set to be a diameter larger than a lens diameter of the light-receiving side lens portion (65).

## Patentansprüche

1. Ein Regentropfensensor, in welchem ein Lichtleitelement an einer Windschutzscheibe (2) mit einem optisch transparenten Teil (5) befestigt ist, wobei das Lichtleitelement das von einem Licht emittierenden Element (91) emittierte Licht an eine Windschutzscheibe leitet und an der Windschutzscheibe reflektierter Licht an ein Licht empfangendes Element (92) leitet,
wobei der Regentropfensensor aufweist:
eine Klammer (3), die zur Befestigung an der Windschutzscheibe (2) ausgebildet ist;
eine Abdeckung (8), die derart ausgebildet ist, dass diese an der Klammer (3) anbringbar ist und von der Klammer (3) abnehmbar ist; und
ein Befestigungselement, das zur Befestigung des Lichtleitelements in der Abdeckung (8) derart ausgebildet ist, dass dieses in einer Befestigungsrichtung zu der Windschutzscheibe (2) vorgeschoben oder zurückgezogen werden kann,
wobei das Befestigungsteil und das elastische Teil (5) in der Befestigungsrichtung zusammengedrückt werden, wenn die Abdeckung (8) an der Kammer (3) befestigt ist, und das Lichtleitelement mittels des elastischen Teils (5) in einen andrückenden Kontakt mit der Windschutzscheibe (2) gebracht wird,
**dadurch gekennzeichnet, dass**
das elastische Teil (5) als eine für Gas durchlässige Silikonschicht, die Silikonöl enthält, ausgebildet ist, und
für die Druckfederkonstante (K1) des Befestigungsteils ein Wert vorgegeben ist, der kleiner als eine Druckfederkonstante (k2) des elastischen Teils (5) ist, so dass der Betrag des Drucks in der Befestigungsrichtung des elastischen Teils (5) zum Zeitpunkt der Befestigung der Abdeckung (8) an der Klammer (3) kleiner wird als ein Betrag des Drucks in der Befestigungsrichtung des Befestigungsteils.

2. Der Regentropfensensor nach Anspruch 1, **dadurch gekennzeichnet, dass**
der Betrag des Drucks des Befestigungsteils zum Zeitpunkt der Befestigung
der Abdeckung (8) an der Klammer (3) größer als ein Wert gemacht ist, der durch das Hinzufügen eines Fehlerbetrages in der Befestigungsrichtung,
der in Abhängigkeit von einer Krümmung der Windschutzscheibe (2) bestimmt wird, und eines Fehlerbetrag in der Befestigungsrichtung der Klammer, die an der Windschutzscheibe (2) befestigt ist, erhalten wird.

3. Der Regentropfensensor nach Anspruch 1 oder Anspruch 2, **dadurch gekennzeichnet, dass** vor der Befestigung der Abdeckung (8) an der Klammer (3) das Befestigungsteil das Lichtleitelement derart hält, dass dieses in einem Zustand in der Befestigungsrichtung vorgeschoben oder zurückgezogen werden kann, in dem das Befestigungsteil von einer freien Länge des Befestigungsteils zusammengedrückt wird, und
der Betrag des Drucks des Befestigungsteils zum Zeitpunkt der Befestigung
der Abdeckung (8) an der Klammer (3) kleiner als der Betrag des Drucks des Befestigungsteils vor der Befestigung der Abdeckung an der Klammer gemacht wird.

4. Der Regentropfensensor nach Anspruch 1 oder Anspruch 2, **dadurch gekennzeichnet, dass** das Lichtleitelement zum Vorschieben oder Zurückziehen in der Befestigungsrichtung integral mit einem Gehäuse (7) vorgesehen ist, indem dieses zusammen mit dem Gehäuse montiert ist, das derart befestigt ist, dass dieses in der Befestigungsrichtung in der Abdeckung (8) vorgeschoben und zurückgezogen werden kann, und das Befestigungsteil das Gehäuse (7) derart hält, dass dieses in der Befestigungsrichtung vorgeschoben und zurückgezogen werden kann, und Positionen hält, die symmetrisch entlang eines Zentrums des elastischen Teils sind, das an eine Oberfläche, an der Seite der Windschutzscheibe, des Lichtleitelements geklebt ist, aus der Befestigungsrichtung gesehen.

5. Der Regentropfensensor nach Anspruch 1 oder Anspruch 2, **dadurch gekennzeichnet, dass** die Abdeckung (8) derart ausgebildet ist, dass diese an der Klammer (3) derart befestigt werden kann, dass nach der Verriegelung eines an einer Endseite in einer longitudinalen Richtung der Abdeckung (8) vorgesehenen Verschlussteils (843) an einem an der Klammer (3) vorgesehenen Verriegelungsteils (33) die andere Endseite in der longitudinalen Richtung in einer Umfangsrichtung um einen Eingriffpunkt (P) des Verschlussteils (843) und des Verriegelungsteils (33) gedreht wird, und während das Befestigungsteil und das elastische Teil in der Befestigungsrichtung von der einen Endseite zusammengedrückt werden, die Abdeckung (8) an der Klammer (3) befestigt ist.

6. Der Regentropfensensor nach Anspruch 1 oder Anspruch 2, **dadurch gekennzeichnet, dass** das Lichtleitelement einen Licht emittierende Linsenseitenteil (64), auf welches das durch das Licht emittierende Element (91) emittierte Licht einfällt, und einen Licht empfangenden Linsenseitenteil (65) aufweist, der dazu führt, dass das an der Windschutzscheibe (2) reflektierte Licht zu dem Licht empfangenden Element (92) austritt, und ein Linsendurchmesser des Licht emittierenden Linsenseitenteils (64) derart vorgegeben ist, dass dieser größer ist als der Linsendurchmesser des Licht empfangenden Linsenseitenteils (65).

## Revendications

1. Capteur de goutte de pluie dans lequel une organe guide de lumière est monté sur une vitre de pare-brise (2) par l'intermédiaire d'un organe élastique optiquement transparent (5), dans lequel l'organe guide de lumière guide la lumière émise depuis un élément d'émission de lumière (91) vers la vitre de pare-brise (2) et guide la lumière réfléchie au niveau de la vitre de pare-brise vers un élément de réception de lumière (92),
le capteur de goutte de pluie comprenant :
une console (3) configurée pour être fixée à la vitre de pare-brise (2) ;
un couvercle (8) configuré pour pouvoir être attaché à et être détaché de la console (3) ; et
un organe de support configuré pour supporter l'organe guide de lumière dans le couvercle (8) pour qu'il soit capable d'avancer et de se rétracter dans une direction de montage par rapport à la vitre de pare-brise (2),
lorsque le couvercle (8) est monté sur la console (3), l'organe de support et l'organe élastique (5) sont comprimés dans la direction de montage, et l'organe guide de lumière est amené en contact de pression avec la vitre de pare-brise (2) via l'organe élastique (5),
**caractérisé en ce que**
l'organe élastique (5) est configuré par une feuille de silicone perméable aux gaz contenant de l'huile de silicone, et
une constante de ressort de compression (K1) de l'organe de support est réglée à une valeur plus petite qu'une constante de ressort de compression (K2) de l'organe élastique (5), de sorte qu'une quantité de compression dans la direction de montage de l'organe élastique (5) au moment du montage du couvercle (8) sur la console (3) devienne plus petite qu'une quantité de compression dans la direction de montage de l'organe de support.

2. Capteur de goutte de pluie selon la revendication 1, **caractérisé en ce que**
la quantité de compression de l'organe de support au moment du montage du couvercle (8) sur la console (3) est rendue plus grande qu'une valeur obtenue en ajoutant une quantité d'erreur dans la direction de montage qui est déterminée selon une courbure de la vitre de pare-brise (2), et une quantité d'erreur dans la direction de montage de la console qui est fixée à la vitre de pare-brise (2).

3. Capteur de goutte de pluie selon la revendication 1 ou la revendication 2, **caractérisé en ce que**
avant que le couvercle (8) soit monté sur la console (3), l'organe de support supporte l'organe guide de lumière pour qu'il soit capable d'avancer et de se rétracter dans la direction de montage dans un état dans lequel l'organe de support est comprimé depuis une longueur libre de l'organe de support, et
la quantité de compression de l'organe de support au moment du montage du couvercle (8) sur la console (3) est rendue plus petite qu'une quantité de compression de l'organe de support avant montage du couvercle sur la console.

4. Capteur de goutte de pluie selon la revendication 1 ou la revendication 2, **caractérisé en ce que**
l'organe guide de lumière est prévu pour avancer et se rétracter dans la direction de montage d'un seul tenant avec un boîtier (7) en étant assemblé au boîtier (7) qui est supporté pour être capable d'avancer et de se rétracter dans la direction de montage dans le couvercle (8), et
l'organe de support supporte le boîtier (7) pour qu'il soit capable d'avancer et de se rétracter dans la direction de montage, et supporte des positions qui sont symétriques à travers un centre de l'organe élastique, qui est collé sur une surface, du côté de la vitre de pare-brise, de l'organe guide de lumière, dans une vue depuis la direction de montage.

5. Capteur de goutte de pluie selon la revendication 1 ou la revendication 2, **caractérisé en ce que**
le couvercle (8) est configuré pour être monté sur la console (3) de manière à ce que, après qu'une portion de verrou (843) prévue d'un côté d'extrémité dans une direction longitudinale du couvercle (8) est verrouillée à une portion de verrouillage (33) prévue au niveau de la console (3), l'autre côté d'extrémité dans la direction longitudinale soit mis en rotation dans une direction circonférentielle autour d'un point d'enclenchement (P) de la portion de verrou (843) et de la portion de verrouillage (33), et tandis que l'organe de support et l'organe élastique sont comprimés dans la direction de montage depuis le côté d'extrémité, le couvercle (8) est monté sur la console (3).

6. Capteur de goutte de pluie selon la revendication 1 ou la revendication 2, **caractérisé en ce que**
l'organe guide de lumière comprend une portion de lentille côté émission de lumière (64) sur laquelle la lumière émise par l'élément d'émission de lumière (91) est incidente, et une portion de lentille côté réception de lumière (65) qui amène la lumière réfléchie au niveau de la vitre de pare-brise (2) à sortir vers l'élément de réception de lumière (92), et
une diamètre de lentille de la portion de lentille côté émission de lumière (64) est réglé pour être un diamètre plus grand qu'un diamètre de lentille de la portion de lentille côté réception de lumière (65).
